# EUROPÄISCHE PATENTSCHRIFT

(11) **EP 2 460 338 B1**
(45) Veröffentlichungstag und Bekanntmachung des Hinweises auf die Patenterteilung: **07.09.2016**
(21) Anmeldenummer: 10722695.3
(22) Anmeldetag: 28.05.2010
(51) Int. Cl.: H04L 29/08, B60W 30/00, B60R 16/023, H04L 29/06

(54) **FAHRZEUGEINHEIT**
VEHICLE UNIT
UNITE EMBARQUEE DANS UN VEHICULE

(30) Priorität: 04.06.2009 DE 102009026758
(43) Veröffentlichungstag der Anmeldung: 06.06.2012
(73) Patentinhaber: Continental Teves AG & Co. oHG, 60488 Frankfurt (DE)
(72) Erfinder: STÄHLIN, Ulrich, 65670 Eschborn (DE); MENZEL, Marc, 35043 Marburg (DE)
(74) Vertreter: Bonn, Roman Klemens
(86) Internationale Anmeldenummer: PCT/EP2010/057502
(87) Internationale Veröffentlichungsnummer: WO 2010/139650

(56) Entgegenhaltungen:
- EP-A1- 1 058 220
- DE-A1- 10 113 321
- US-A1- 2004 093 155
- US-A1- 2007 015 485
- US-B1- 6 532 406

## Beschreibung

Die Erfindung betrifft eine Fahrzeugeinheit in einem Fahrzeug, insbesondere eine in ein Kommunikationsnetz mit anderen Fahrzeugeinheiten in dem Fahrzeug integrierte Fahrzeugeinheit. Das Fahrzeug ist mit mindestens einer Multimedia-steuereinheit, bspw. einer Multimedia-ECU (Electronic Control Unit), und mit mindestens einer Sicherheitssteuereinrichtung, bspw. einer Safety-ECU, zur Steuerung von Multimedia-Funktionen und von Sicherheitsfunktionen ausgestattet. Die vorgeschlagene Fahrzeugeinheit ist als Vermittlungseinheit zwischen der Multimediasteuereinheit und der Sicherheitssteuereinheit vorgesehen, wobei die Vermittlungseinheit bzw. ein in der Vermittlungseinheit vorgesehener Rechner dazu eingerichtet ist, von der Multimediasteuereinheit empfangene Daten aufzubereiten und der Sicherheits-Steuereinrichtung zur Verfügung zu stellen.

Der Begriff Multimediasteuereinheit soll im Sinne dieser Schrift weit gefasst sein und sämtliche Geräte im Fahrzeug betreffen, die dem Begriff "Multimedia" bzw. Infotainment zugeordnet werden. Dies sind insbesondere Telematik-Anwendungen (bspw. Kartendarstellungen, Navigationssystem oder dgl.), Sprachkommunikationsanwendungen (Mobilfunk bzw. Mobilfunkanwendungen), Unterhaltungselektronik (Radio, Fernsehen, Video oder dgl.) sowie Datenschnittstellen zu Nutzergeräten (Bluetooth, W-LAN oder dgl.), die Fahrzeuginsassen mitbringen und in das Fahrzeugelektroniksystem einbinden möchten. Diesen Anwendungen ist gemeinsam, dass sie keine sicherheitsrelevanten Funktionen in dem Fahrzeug übernehmen.

Solche sicherheitsrelevanten Funktionen sind Sicherheitssteuereinrichtungen vorbehalten, zu denen insbesondere Fahrerassistenzsysteme gehören, die beim Erkennen von Gefahrensituationen durch Fahrzeugsensoren (Fahrdynamiksensoren), Umfeldsensoren (die Umgebung des Fahrzeugs erfassende Sensoren) oder Fahrzeug-zu-Fahrzeug bzw. Fahrzeug-zu-Umgebung Kommunikation (C2C- bzw. C2X-Kommunikation), wobei die C2X-Kommunikation die C2C-Kommunikation als Sonderfall umfasst, aktiv in die Steuerung des Fahrzeugs bspw. durch eine Notbremsung eingreifen. Beispiele hierfür sind ADAS (Advanced Driver Assistance System) oder ESC (Electronic Stability Control).

Bisher waren die Systeme im Fahrzeug getrennt in Systeme bzw. Einheiten mit hohen Sicherheitsanforderungen, also Systeme, die für den sicheren Betrieb des Fahrzeugs notwendig sind bzw. die Sicherheit des Fahrers erhöhen, und solche Systeme, die der Unterhaltung und Information des Fahrers dienen, wie Navigationssysteme oder Radioeinheiten. Diese Unterscheidung resultiert von den unterschiedlichen Anforderungen an die Zuverlässigkeit der Multimediasysteme und der Sicherheitssysteme. An den Sicherheitssystemen teilhabende Sicherheitseinheiten werden "safety driven" entwickelt, wohingegen Multimediaeinheiten der Multimediasysteme mit der Entwicklung der Consumer-Elektronik mithalten müssen und daher "feature driven" entwickelt werden.

Die "feature driven" entwickelten Multimediaeinheiten weisen eine Vielzahl von Funktionen auf, die schnell in die Fahrzeugeinheiten integriert werden sollen, bei Fehlbedienungen oder in bestimmten Situationen jedoch zu Fehlfunktionen und ggf. dem Abstürzen des Systems führen, das dann durch einen Neustart wiederhergestellt werden muss. Dies ist bei Multimedia-Funktionen nicht weiter dramatisch, da diese lediglich der Unterhaltung und Information des Fahrers dienen, so dass ein Neustart oder eine Fehlfunktion keine Auswirkungen auf die Fahrzeugsicherheit hat.

Sicherheitseinheiten dagegen, die unmittelbar sicherheitsrelevante Fahrzeugfunktionen betreffen oder den Fahrer über Sicherheitsrisiken informieren, haben direkte Auswirkungen auf die Sicherheit im Straßenverkehr. Daher bestehen wesentlich höhere Anforderungen an die Zuverlässigkeit und Stabilität dieser Systeme. Diese entwickeln sich wesentlich langsamer und sind so robust, dass sie im Normalfall nicht ausfallen und ggf. sogar durch vorgesehene Redundanzen den Ausfall einiger elektronischen Bauteile verkraften.

Die Entwicklung derartiger Sicherheitseinheiten ist aus diesem Grunde sehr teuer, so dass die beiden Welten in der Fahrzeugelektronik üblicherweise getrennt gehalten werden. Teilweise ist es möglich, eine Kommunikation zwischen den beiden Welten über ein Fahrzeug-Kommunikationsnetz herzustellen, das dann jedoch nicht den hohen Sicherheitsanforderungen genügen muss. Bei der Verbindung der beiden Welten und dem Austausch von Informationen über diese Systemgrenzen hinweg, stellen jedoch die verschiedenen Grundanforderungen ("feature driven" vs. "safety driven") ein Problem dar, da ein Sicherheitssystem deutlich langsamer weiterentwickelt wird und eine Multimedia-Einheit aufgrund der schnellen Entwicklungszyklen keinen Fokus auf die Einhaltung von Sicherheitskriterien bspw. nach IEC 61508 bzw. dem analogen Automotive-Standard legen muss. Diese Systeme entwickeln sich wesentlich schneller weiter, so dass es an den Kommunikations-Schnittstellen zwischen diesen beiden Problemen immer wieder zu Schwierigkeiten kommt.

Aus der WO 2009/101163 A2 ist ein Fahrzeugsystem zur Navigation und Fahrerassistenz mit einer Navigationseinheit, einer Providereinheit, einer Sensoreinheit und einem Fahrerasssistenzsystem bekannt, bei dem die Navigationseinheit als Teil einer Multimediasteuereinheit Kartenausschnitte der Kartenumgebung an eine Providereinheit liefert, welche diese Daten mit weiteren Sensor- oder sonstigen Informationen abgleicht und eine Umgebungskarte des Fahrzeugs erzeugt, welche von dem Fahrerassistenzsystem verwendet wird, um in Gefahrensituationen geeignet reagieren zu können. Dieses System läuft unter dem Stichwort "Assistenz-Horizont" und wird bspw. in dem ADAS-System als eHORIZON eingesetzt. Während die Navigationseinheit als Multimedia-einheit mit lediglich geringen Sicherheitsanforderungen entwickelt wird, ist es für die Providereinheit als den Horizont für das Fahrerassistenzsystem zur Verfügung stellende Einheit wünschenswert, dass diese Einheit über eine hohe Sicherheitsstufe verfügt, so dass in der Schnittstelle zwischen der Navigationseinheit und der Providereinheit der Übergang von einem "feature driven" entwickelten System zu einem "safety driven" entwickelten System stattfindet und die Providereinheit eine entsprechend hochwertige und teure Einheit darstellt. Problematisch ist in diesem Zusammenhang, dass sich die Multimediasteuereinheiten schnell weiterentwickeln und ggf. Schnittstellen und Funktionen zu der Providereinheit nicht mehr austauschbar genormt sind. Dies erfordert eine Überarbeitung der Providereinheit, die jedoch langsamer geht und wesentlich teurer ist, da die Schnittstelle selbst wieder den hohen Sicherheitsanforderungen genügen muss.

EP 1058220, welches Kommunikationssystem für ein Fahrzeug offenbart, mit fahrzeugseitigen Anwendungseinheiten zur Durchführung zugehöriger Anwendungsfunktionen und mehreren Funkkommunikationskanälen zur Kommunikation der Anwendungseinheiten mit der Fahrzeugaußenwelt, und eine zentrale Kommunikationsplattformeinheit zur variablen Anbindung der Anwendungseinheiten an die mehreren Funkkommunikationskanäle.

Aufgabe der vorliegenden Erfindung ist es, hier eine flexiblere Schnittstelle zwischen den Multimediasteuereinheiten und den Sicherheitssteuereinheiten in einem Fahrzeug zur Verfügung zu stellen.

Diese Aufgabe wird erfindungsgemäß mit den Merkmalen des Anspruchs 1 gelöst. Dabei ist vorgesehen, dass die erfindungsgemäß vorgeschlagene Vermittlungseinheit auch dazu eingerichtet ist, von der Sicherheitssteuereinheit empfangene Daten an die Multimediasteuereinheit weiterzugeben (im Sinne einer bidirektional kommunizierenden Vermittlungseinheit), was auf einfache Weise einen bidirektionalen Kommunikationsfluss ermöglicht, ohne dass die Sicherheitssteuereinheit selbst an eine Schnittstelle einer Multimediasteuereinheit mit einer niedrigeren Sicherheitsstufe angeschlossen sein muss. Weiter zeichnet sich die Vermittlungseinheit erfindungsgemäß dadurch aus, dass bei der Vermittlungseinheit eine höhere Sicherheitsstufe als bei der Multimediasteuereinheit und eine niedrigere Sicherheitsstufe als bei der Sicherheitssteuereinheit erreicht wird, so dass die Vermittlungseinheit in der Herstellung und Entwicklung kostengünstiger ist und schneller an sich ändernde Anforderungen der "feature driven" Multimediasteuereinheiten angepasst werden kann, ohne dass die hochsicherheitsrelevanten Sicherheitssteuereinheiten angepasst werden müssen. Diese Vermittlungseinheit verbindet also die beiden Welten "feature driven" und "safety driven" und fungiert somit als Vermittlung zwischen der Multimediawelt und der Sicherheitswelt.

Die Vermittlungseinheit kann dabei als eine oder auch mehrere Electronic Control Units (ECU)ausgebildet sein, die jedoch nicht diegleichen Sicherheitsanforderungen (SIL - Safety Integrity Level) der Sicherheitswelt hat, aber eine deutlich höhere SIL-Einstufung als die Multimediawelt aufweist. Diese Zwischen-Sicherheitsstufe erlaubt bereits eine Echtzeitfähigkeit der Vermittlungseinheit sowie eine Zertifizierung der Software und eine komplette Systemüberwachung. Hierdurch werden katastrophale Fehler vermieden, die Auswirkungen auf die Funktion der Sicherheitseinrichtungen haben können. Die Leistungsfähigkeit dieser Vermittlungseinheit ist im Vergleich zu den Multimedia-Einheiten jedoch verringert, was der höheren Systemsicherheit geschuldet ist.

Zum Erreichen dieser mittleren Sicherheitsstufe zwischen der höheren Sicherheitsstufe der Sicherheitssteuereinheit und der niedrigeren Sicherheitsstufe der Multimediasteuereinheit kann insbesondere vorgesehen sein, dass die Vermittlungseinheit dazu eingerichtet ist, insbesondere kontinuierlich eine Systemüberwachung durchzuführen. Diese kann so ausgebildet sein, dass die Vermittlungseinheit im Fehlerfall eine Fehlermeldung ausgibt, welche sowohl den Nutzer als auch die Sicherheitseinrichtungen von der Fehlfunktion unterrichtet, so dass sowohl der Fahrer als auch die Sicherheitseinrichtungen sich auf das Fehlen der zur Verfügung gestellten Informationen einstellen können, und evtl. neu gestartet wird.

Gemäß einer Weiterentwicklung der vorgeschlagenen Fahrzeugeinheit kann die Vermittlungseinheit zur Verbindung mit den diversen anderen Fahrzeugeinheiten mindestens einen Anschluss für eine Multimediasteuereinheit und mindestens einen Anschluss für eine Sicherheitssteuereinheit aufweisen. Die Anschlüsse können dann insbesondere unterschiedliche Sicherheitsstufen aufweisen, vorzugsweise jeweils die Sicherheitsstufe der angeschlossenen Einheit.

In diesem Fall ist es erfindungsgemäß z. B. möglich, die Anschlüsse an die Multimediasteuereinheit konfigurierbar auszugestalten, so dass diese einfach an verschiedene Multimediasteuereinheiten oder neuere Gerätegenerationen angepasst werden können.

Dazu ist es erfindungsgemäß besonders vorteilhaft, wenn die Vermittlungseinheit mehrere Recheneinheiten aufweist, von denen eine Recheneinheit der Konfiguration der Schnittstelle dient und derart eingerichtet ist, dass sie unabhängig von der äußeren Schnittstelle zu der Multimediasteuereinheit an einer internen Schnittstelle einen genau definierten Standard zur Verfügung stellt, der von der anderen Recheneinheit in einem geschlossenen System mit der Sicherheitsstufe der Vermittlungseinheit abgefragt werden kann.

Hierdurch wird auf einfache Weise eine konfigurierbare erste Schnittstelle erreicht, ohne in das System der zweiten Schnittstelle zu den Sicherheitssteuereinheiten eingreifen zu müssen. Die erste Recheneinheit der Vermittlungseinheit kann daher auch eine geringere Sicherheitsstufe aufweisen als die zweite bzw. weitere Recheneinheiten der Vermittlungseinheit, so dass Konfigurationseingriffe durch den Nutzer oder Werkstätten erlaubt sein können, die neue Geräte anschließen. In einem derartigen System ist die Systemüberwachung der Vermittlungseinheit vorzugsweise in die Recheneinheit mit der höheren Sicherheitsstufe integriert, so dass Fehler bei der Konfiguration der ersten Recheneinheit mit niedrigerer Sicherheitsstufe zuverlässig erkannt und gemeldet werden können.

Gemäß einer weiteren Ausführungsform der Fahrzeugeinheit kann die Vermittlungseinheit, im Falle mehrerer Recheneinheiten mit unterschiedlicher Sicherheitsstufe die Recheneinheit mit der Sicherheitsstufe der Vermittlungseinheit, dazu eingerichtet sein, eine Vorverarbeitung der Daten für eine direkte bidirektionale Adhoc-Netzwerk-Funkkommunikation, eine Positionierung (Positionserkennung) auf Grundlage von Satelliten-Positionsdaten, Kartendaten, Fahrzeug-zu-Umgebung-Kommunikationsdaten (welche die Fahrzeug-zu-Fahrzeug-Kommunikation mit einschließt), Fahrzeug-Sensordaten und/oder Umwelt-Sensordaten und eine Ermittlung des erwarteten Straßen- und Verkehrsverlaufs (Umfeldrepräsentation) durchführt.

Die Ermittlung des erwarteten Straßen- und Verkehrsverlaufs kann eine eHORIZON-Prognose bzw. lediglich eine Vorbereitung dieser Prognose im Sinne einer zur Verfügung gestellten Umgebungskarte des Fahrzeugs sein. Eine Vorverarbeitung der Daten für die bidirektionale Adhoc-Netzwerk-Funkkommunikation kann insbesondere eine Aufbereitung der Daten im Rahmen des ITS-Standards für eine DSRC- bzw. ITS-G5-Funkkommunikation bedeuten, wobei sämtliche ITS-Layer oder nur die die inhaltliche Aufbereitung der Daten entsprechende ITS-Layer in der Recheneinheit der Vermittlungseinheit abgearbeitet werden können. Nähere Informationen zu den Standards der verschiedenen ITS-Layer findet sich im Internet unter "www.standards.its.dot.gov", so dass an dieser Stelle nicht näher auf die Art der DSRC- bzw. ITS-G5-Kommunikation nach dem ITS-Standard (ITS - Intelligent Transportation System) eingegangen werden soll.

Fahrzeugsensoren sind vorzugsweise solche Sensoren, die einen Zustand des Fahrzeugs oder einen Zustand von Fahrzeugteilen erfassen, insbesondere deren Bewegungszustand. Dies können Wegstreckensensoren, Geschwindigkeitssensoren, Lenkradwinkelsensoren, Drehzahlsensoren, Gierratensensoren und dgl. sein. Unter Umfeldsensoren versteht die Schrift solche Sensoren, die das Umfeld des Fahrzeugs erfassen, wobei die Umfeldsensoren am Fahrzeug montiert sind und autark, d. h. ohne Informationssignale von außen, Objekte oder Zustände im Umfeld des Fahrzeugs erfassen. Hierzu zählen insbesondere Kameras, Radar-Sensoren, Lidar-Sensoren, UltraschallSensoren oder dgl.

Für die Fahrzeug-zu-Fahrzeug-Kommunikation bzw. die Fahrzeug-zu-Umgebung-Kommunikation wird vorzugsweise das DSRC- bzw. ITS-G5-System nach dem ITS-Standard eingesetzt.

Erfindungsgemäß kann die Vermittlungseinheit in einem Gehäuse integriert ausgebildet sein. Gemäß der vorliegenden Erfindung kann eine Vermittlungseinheit jedoch auch auf mehrere Moduleinheiten aufgeteilt sein, wobei vorzugsweise jede der Moduleinheiten eine eigene Recheneinheit aufweist. Jede dieser Moduleinheiten weist dabei eine gegenüber der Multimediasteuereinheit erhöhte Sicherheitsstufe und eine gegenüber der Sicherheitssteuereinheit erniedrigte Sicherheitsstufe auf. Dabei können alle Moduleinheiten der Vermittlungseinheit vorzugsweise dieselbe Sicherheitsstufe aufweisen. Es ist jedoch auch möglich, die Sicherheitsstufen entsprechend den übernommenen Funktionen unterschiedlich auszubilden. Dies bietet sich z. B. dann an, wenn ein-zelne Moduleinheiten mit Anschlüssen zu Multimediasteuereinheiten sowie andere Moduleinheiten zur Übernahme von Funktionen und ggf. weitere Moduleinheiten für Sicherheitssteuereinheiten vorgesehen sind. Das Vorsehen verschiedener Moduleinheiten ist nicht darauf beschränkt, dass jede Moduleinheit ein eigenes Gehäuse aufweist. Es ist erfindungsgemäß auch möglich, verschiedene Moduleinheiten in einem gemeinsamen Gehäuse vorzusehen, wobei die Moduleinheiten in diesem Fall vorzugsweise logisch getrennt sind, so dass die einzelnen Moduleinheiten einfach separat austauschbar sind und zwischen den Moduleinheiten interne, vorzugsweise standardisierte Schnittstellen ausgebildet sind.

In diesem Fall ist es besonders vorteilhaft, wenn die mehreren Moduleinheiten der Vermittlungseinheit jeweils Anschlüsse zur Verbindung mit anderen Moduleinheiten der Vermittlungseinheit aufweisen, welche vorzugsweise der Sicherheitsstufe der jeweiligen Moduleinheiten entsprechen, wobei bei unterschiedlichen Moduleinheiten vorzugsweise die höchste Sicherheitsstufe gewählt wird. Diese Anschlüsse ermöglichen auf besonders einfache Weise auch einen Austausch der bspw. als Steckkarten ausgebildeten Moduleinheiten.

Gemäß einer weiteren bevorzugten Ausführungsform ist es sinnvoll, in die Vermittlungseinheit eine Mobilfunkeinheit mit einer Notrufeinheit zu integrieren, da es wünschenswert ist, eine Notrufeinheit mit einer erhöhten Sicherheitsstufe zu betreiben, so dass diese Telematikfunktion mit in die Vermittlungseinheit mit der gegenüber Multimediasteuereinheiten höheren Sicherheitsstufe integriert werden kann. Ferner kann die Vermittlungseinheit dazu eingerichtet sein, eine Umfeldrepräsentation im Sinne einer Umfeldkarte des Fahrzeugs zu erzeugen, die bspw. als Horizont (eHORIZON) für Fahrerassistenzsysteme (bspw. ADAS - Advanced Driver Assistance System) verwendet werden kann.

Weitere Vorteile, Merkmale und Ausführungsbeispiele der vorliegenden Erfindung ergeben sich auch aus der nachfolgenden Beschreibung von Ausführungsbeispielen und der Zeichnungen. Dabei bilden alle beschriebenen und/oder bildlich dargestellten Merkmale für sich oder in beliebiger Kombination den Gegenstand der vorliegenden Erfindung, auch unabhängig von ihrer Zusammenfassung in den Ansprüchen oder deren Rückbezügen.

Es zeigen:
- Fig. 1: schematisch eine erfindungsgemäße Vermittlungseinheit in einem Fahrzeugnetz gemäß einer ersten Ausführungsform und
- Fig. 2: schematisch eine erfindungsgemäße Vermittlungseinheit in einem Fahrzeugnetz gemäß einer zweiten Ausführungsform.

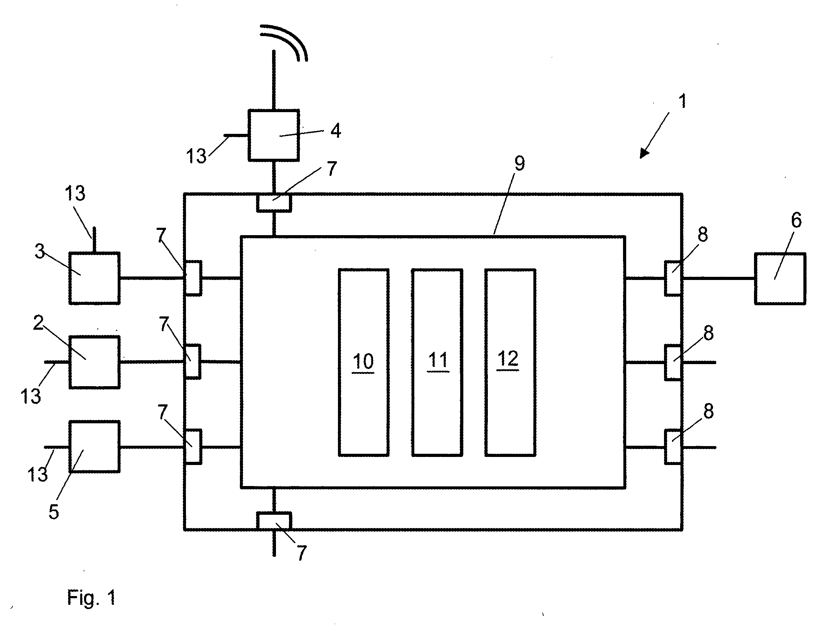

Fig. 1 ist eine als Vermittlungseinheit ausgebildete erfindungsgemäße Fahrzeugeinheit 1 dargestellt, die sich in einem Fahrzeug mit mindestens einer Multimediasteuereinheit 2, 3, 4 befindet. Die Multimediasteuereinheit 2 ist als Radio- und Unterhaltungseinheit ausgebildet. Die Multimediasteuereinheit 3 stellt eine Telematik- bzw. Navigationseinheit dar und die Multimediasteuereinheit 4 ist eine intelligente Antenne, über welche eine zelluläre Mobilfunkkommunikation, eine Satelliten-Kommunikation und eine Fahrzeug-zu-Fahrzeug-Kommunikation bzw. Fahrzeug-zu-Umgebung-Kommunikation durchgeführt werden kann. Für die Fahrzeug-zu-Fahrzeug- bzw. Fahrzeug-zu-Umgebung-Kommunikation wird nachfolgend auch die Bezeichnung C2X-Kommunikation gewählt, die vorzugsweise nach dem ITS-Standard mittels DSRC- bzw. ITS-G5-Kommunikation durchgeführt wird. Als weitere Einheit ist eine Fahrzeugsensor- und/oder Umfeldsensoreinheit 5 vorhanden.

Ferner ist das Fahrzeug mit einer Sicherheitssteuereinrichtung 6 ausgestattet, die als Fahrerassistenzsystem, bspw. ADAS - Advanced Driver Assistance System, ausgebildet sein kann. Die Multimediasteuereinheiten 2, 3, 4 weisen einen wesentlich niedrigeren Sicherheitsstandard auf als die Sicherheitssteuereinheit 6, die sich in unterschiedlichen Sicherheitsstufen des SIL-Levels (Safety Integrity Level) wiederspiegeln.

Ursache hierfür ist die unterschiedliche Entwicklung der verschiedenen Einheiten. Die Multimediasteuereinheiten sind so ausgebildet, dass schnell neue, am Markt verfügbare Merkmale mit integriert werden. Diese "feature driven" Entwicklung bedingt, dass bei der Integration neuer Merkmale in die Einheiten unter bestimmten Anwendungsbedingen Fehler auftreten können, die zu einem Ausfall der Anwendungen führen und ggf. sogar einen Neustart der Anwendungen erfordern, damit diese ihre Funktion wieder aufnimmt. Dies ist bei Sicherheitssteuereinrichtungen, die unmittelbar die Sicherheit des Fahrzeugs betreffen und bspw. Fahrerassistenzfunktionen erfüllen, nicht hinnehmbar. Daher weisen diese Sicherheitssteuereinheiten einen wesentlich höheren SIL-Level auf. Diese Sicherheitssteuereinheiten 6 sind "security driven" entwickelt, d. h. die Entwicklung wurde so sorgfältig vorgenommen und die in den Einheiten verwendeten elektronischen Elemente sind so zuverlässig, dass ein Ausfall des Systems extrem unwahrscheinlich ist. Diese Entwicklung bedingt, dass neue Merkmale nur sehr zögerlich und nach ausführlichen Tests in diese Einheit integriert werden, so dass die Entwicklungsgeschwindigkeiten für die beiden System auseinander laufen. Dies erschwert eine Verbindung dieser beiden Systeme im Fahrzeug.

Trotzdem ist es wünschenswert, Multimediasteuereinheiten 2, 3, 4 und Sicherheitssteuereinheiten 6 in dem Fahrzeugsystem zu verbinden und bspw. Informationen auszutauschen. Hierzu schlägt die Erfindung die Vermittlungseinheit 1 vor, an welche die Multimediasteuereinheiten 2, 3, 4, die Sicherheitssteuereinheit 6 sowie die Fahrzeugsensor- und/oder Umfeldsensoreinheit 5 angeschlossen sind. Letztere kann je nach Qualität und Ausführung einen höheren oder einen niedrigeren SIL-Level aufweisen.

Zum Anschluss an die Vermittlungseinheit sind Anschlüsse 7 mit einer niedrigen Sicherheitsstufe zum Anschluss der Multimediasteuereinheiten 2 bis 4 sowie der Fahrzeugsensor-und Umfeldsensoreinheit 5 vorgesehen, wobei die Erfindung nicht auf die konkret genannten Einheiten beschränkt ist, wie durch den freien Anschluss 7 in Fig. 1 angedeutet.

Die Sicherheitssteuereinheit 6 ist dagegen über einen Anschluss 8 mit hoher Sicherheitsstufe an die Vermittlungseinheit 8 angeschlossen, wobei auch hier weitere Anschlüsse 8 zur Verbindung mit weiteren Sicherheitssteuereinheiten vorgesehen sein können.

Sowohl die Anschlüsse 7 mit niedriger Sicherheitsstufe als auch die Anschlüsse 8 mit hoher Sicherheitsstufe sind an eine Recheneinheit 9 der Vermittlungseinheit 1 angeschlossen. Die Anschlüsse 7 mit niedriger Sicherheitsstufe und die Anschlüsse 8 mit hoher Sicherheitsstufe unterscheiden sich bspw. jedoch darin, dass die Anschlüsse 7 durch die Recheneinheiten 9 konfigurierbar und an die jeweils angeschlossene Multimedia-Steuereinheit 2 bis 4 bzw. Fahrzeugsensor- oder Umfeldsensoreinheit 5 anpassbar sind oder die verwendeten Elektronikkomponenten günstiger sind. Der Anschluss 8 mit hoher Sicherheitsstufe ist dagegen nicht einfach konfigurierbar und erfüllt bereits die hohen Sicherheitsanforderungen der Sicherheitssteuereinheit 6 entsprechend ihrer Sicherheitsstufe. Hierdurch wird deutlich, dass die Vermittlungseinheit 1 dazu vorgesehen ist, die Multimediasteuereinheiten 2 bis 4 und die Sicherheitssteuereinheiten 6 mit ihren unterschiedlichen Sicherheitsstufen bzw. allgemein Fahrzeugeinheiten unterschiedlicher Sicherheitsstufen, aneinander anzuschließen und eine flexible Kommunikation zwischen diesen Einheiten zu ermöglichen.

Neben dem Herstellen einer solchen dem Datenaustausch in beiden Richtungen dienenden Verbindungen zwischen den Einheiten 2, 3, 4, 5 mit niedriger Sicherheitsstufe und den Einheiten 6 mit hoher Sicherheitsstufe kann die Recheneinheit 9 der Vermittlungseinheit 1 auch zur Durchführung bestimmter Aufgaben eingerichtet sein. In diesem Zusammenhang sind hier beispielhaft eine Umfeldrepräsentation 10, eine Positionierung 11 und eine Kommunikationsvorverarbeitung 12 dargestellt, ohne dass die Erfindung auf diese besonders vorteilhafte Weise in der Vermittlungseinheit realisierten Aufgaben beschränkt ist. Die Umfeldrepräsentation 10 dient dazu, die aktuelle Umgebung des Fahrzeugs mittels einer Art Karte bzw. Horizont abzubilden, der als eine Eingangsgröße der Sicherheitssteuereinrichtungen 6 verwendet werden kann, damit ein Fahrerassistenzsystem 6 die Umgebung des Fahrzeugs kennt und in Gefahrensituationen angepasst an die Umgebung des Fahrzeugs reagieren kann. Eine bekannte Anwendung hierfür ist eHORIZON in Verbindung mit dem ADAS-Fahrerassistenzsystem. Die Funktionsweise einer derartigen Umfeldrepräsentation ist in der WO 2009/101163 offenbart, so dass auf weitere Erläuterungen hierzu verzichtet wird.

Eine weitere Aufgabe, welche die Recheneinheit 9 der Vermittlungseinheit 1 übernehmen kann, ist eine Positionierung 11 auf Basis von Satellitensignalen, bspw. GPS, Karteninformationen, C2X-Kommunikation und Fahrzeug- und/oder Umfeldsensoren. Für die Ermittlung der Position des eigenen Fahrzeugs können mittlerweile diverse Techniken eingesetzt werden, die die Satellitenortungen ersetzen oder verbessern können. Ziel ist es daher, in der Vermittlungseinheit sämtliche Methoden zur Positionierung zusammenzuführen und dem Fahrzeug eine einheitliche, möglichst genaue Position bereitzustellen, die sowohl an Multimediasteuereinheiten 2 als auch an Sicherheitssteuereinheiten 6 übertragen werden kann. Mögliche Techniken für die Positionierungen sind GPS, Gallileo oder andere satellitengestützte Ortungssysteme, eine Positionierung über WLAN, eine Positionierung über Mobilfunk, Kartendaten, Fahrzeugsensoren, wie Raddrehzahlsensoren, Lenkradwinkelsensoren, Gierratensensoren, sowie Umfeldsensoren, wie bspw. Kameras einer nachfolgenden Triangulations- oder Landmarkenauswertung, Transponder usw., wobei einige der vorgenannten Techniken auch nur unterstützend eingesetzt werden können und eine vollständige Positionierung des Fahrzeugs nicht erlauben.

Diese Anwendung ist deshalb besonders vorteilhaft, weil alle oder möglichst viele Fahrzeugeinheiten an die Vermittlungseinheit 1 angeschlossen sind, so dass eine Kommunikation über die Vermittlungseinheit einfach erfolgen kann und dort sämtliche Daten und Informationen zur Verfügung stehen. Es ist natürlich nicht ausgeschlossen, dass die einzelnen Multimediasteuereinheiten 2 bis 4 bzw. Sensoreinheiten 5 auch über ein Fahrzeugkommunikationsnetz 13 und unter Umgehung der Vermittlungseinheit 1 miteinander kommunizieren.

Eine weitere sinnvolle Anwendung in der Recheneinheit 9 der Vermittlungseinheit 1 ist eine Vorverarbeitung von C2X-Informationen, insbesondere im Rahmen des ITS-Standards (Intelligent Transportation System). Ziel ist es dabei, die erhaltenen Daten zu verdichten, relevante Objekte und Ereignisse zu extrahieren, Daten zu validieren, Metadaten für eine Fusion mit Umfeldsensoren zu erzeugen oder zu ermitteln, Empfangslücken zu selektieren und zu überbrücken sowie Probleme durch den Datenschutz, z. B. durch einen ID-Wechsel, zu kompensieren.

Die Vermittlungseinheit 1 kann dabei die Aufgaben 10 bis 12 alle erfüllen oder auch nur einzelne Aufgaben wahrnehmen bzw. lediglich eine Kommunikation zwischen Fahrzeugeinheiten mit unterschiedlichen Sicherheitsstufen in bidirektionaler Weise ermöglichen, so dass die Multimediasteuereinheiten 2, 3, 4 bzw. vergleichbare Einheiten, wie Sensoreinheiten 5, Daten an die Sicherheitseinheiten 6 senden können und Daten von den Sicherheitssteuereinheiten 6 auch in Multimediasteuereinheiten 2 bis 5 dargestellt oder verwedet werden können.

Daher ist es auch möglich, als Vermittlungseinheit 1 bspw. eine Einheit zur Umfeldrepräsentation 10 mit den entsprechenden Anschlüssen 7, 8 auszustatten und ggf. weitere Aufgaben wie die Positionierung 11 und die Kommunikationsvorverarbeitung 12 mit in die Einheit zur Umfeldrepräsentation 10 zu integrieren, so dass diese Einheit als Vermittlungseinheit 1 gemäß der vorliegenden Erfindung arbeiten kann.

Entsprechendes ist auch für eine Telematikeinheit, insbesondere eine Notrufeinheit, möglich, die vorzugsweise auch in einer höheren Sicherheitsstufe arbeiten sollte als eine übliche Multimediasteuereinheit 2, so dass diese Einheit besonders vorteilhaft die erfindungsgemäße Vermittlungseinheit 1 bilden kann. Auch eine Fahrzeugsensor- oder Umfeldsensoreinheit 5 arbeitet häufig mit einer höheren Sicherheitsstufe als eine reine Multimediasteuereinheit 2, da die Daten der an die Sensoreinheit 5 angeschlossenen Sensoren häufig durch Sicherheitssteuereinheiten 6 vermittelt werden sollen. Daher könnte auch in ein derartiges Sensorcluster 5 die erfindungsgemäße Vermittlungseinheit 1 mit integriert werden.

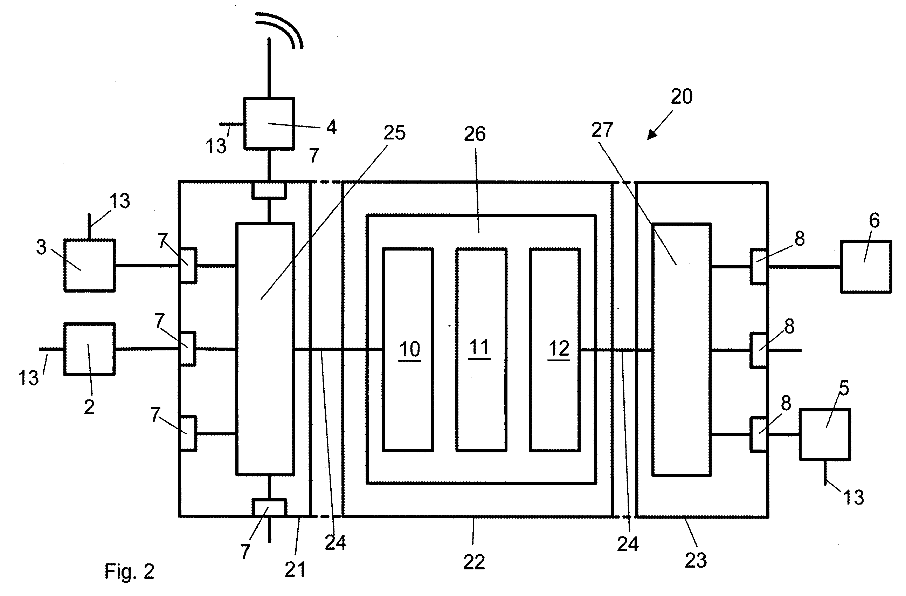

Fig. 2 zeigt eine alternative Ausführungsform einer Vermittlungseinheit 20, deren Grundfunktion jedoch der der Vermittlungseinheit 1 entspricht und daher nachfolgend nicht mehr ausführlich beschrieben wird. Für dieselben Funktionen bzw. angeschlossenen Einheiten werden dieselben Bezugszeichen wie in Fig. 1 verwendet.

Die Vermittlungseinheit 20 ist jedoch modular aufgebaut und weist drei verschiedene Module auf. Ein erstes Modul ist ein Anschlussmodul 21 mit Anschlüssen 7 mit niedriger Sicherheitsstufe. Das zweite Modul ist ein Funktionsmodul zur Durchführung bestimmter Aufgaben und das dritte Modul ist ein Anschlussmodul 23 mit Anschlüssen 8 mit hoher Sicherheitsstufe. Sämtliche Module 21, 22, 23 der Vermittlungseinheit 20 sind über eine interne Schnittstelle 24 miteinander verbunden und weisen jeweils eine Recheneinheit 25, 26 und 27 auf. Die Recheneinheiten 25 und 27 der Anschlussmodule 21 und 23 sind jeweils dazu ausgebildet, die Anschlüsse 7 mit niedriger bzw. die Anschlüsse 8 mit hoher Sicherheitsstufe entsprechend anzusprechen, wobei die Recheneinheit 25 insbesondere eine Konfiguration der Anschlüsse 7 zulässt. Aufgrund dieser Konfigurationsmöglichkeit weist das Anschlussmodul 21 eine niedrigere Sicherheitsstufe als das Funktionsmodul 22 und das Anschlussmodul 23 auf, die erfindungsgemäß dieselbe Sicherheitsstufe aufweisen. Das Anschlussmodul 21 weist vorzugsweise jedoch noch eine höhere Sicherheitsstufe als die Multimediasteuereinheiten 2 bis 4 auf. Die Sicherheitsstufe des Funktionsmoduls 22 und vorzugsweise auch des Anschlussmoduls 23 liegen unterhalb der Sicherheitsstufe der Sicherheitssteuereinheiten 6. Da die Fahrzeugsensor- und/oder Umfeldsensoreinheit 5 gemäß Fig. 2 eine höhere Sicherheitsstufe aufweist als bei Fig. 1, ist diese unmittelbar an einen Anschluss 8 mit hoher Sicherheitsstufe in dem Anschlussmodul 23 angeschlossen, wobei die Sensordaten über die interne Schnittstelle 24 zwischen den verschiedenen Modulen 21, 22, 23 der Vermittlungseinheit 2 ausgetauscht und jeweils bidirektional über sämtliche Anschlüsse 7, 8 ausgegeben werden können.

Das Funktionsmodul 22 umfasst in einer Recheneinheit 26 die Aufgaben Umfeldrepräsentation 10, Positionierung 11 und Kommunikationsvorverarbeitung 12 neben ggf. weiteren Aufgaben, wie insbesondere den Kommunikationsanschluss von Fahrzeugeinheiten unterschiedlicher Sicherheitsstufen aneinander.

### Bezugszeichenliste

- 1: Vermittlungseinheit
- 2: Multimediasteuereinheit, Radio- und Unterhaltungseinheit
- 3: Multimediasteuereinheit, Telematik- bzw. Navigationseinheit
- 4: Multimediasteuereinheit, Antenneneinheit
- 5: Fahrzeugsensor- und/oder Umfeldsensoreinheit
- 6: Sicherheitssteuereinheit, Fahrerassistenzsystem
- 7: Anschluss mit niedriger Sicherheitsstufe
- 8: Anschluss mit hoher Sicherheitsstufe
- 9: Recheneinheit
- 10: Umfeldrepräsentation
- 11: Positionierung
- 12: Kommunikations-Vorverarbeitung
- 13: Fahrzeugkommunikationsnetz

- 20: Vermittlungseinheit
- 21: Anschlussmodul mit Anschlüssen 7
- 22: Funktionsmodul
- 23: Anschlussmodul mit Anschlüssen 8
- 24: interne Schnittstelle, Anschluss
- 25: Recheneinheit
- 26: Recheneinheit
- 27: Recheneinheit

## Patentansprüche

1. Fahrzeugeinheit in einem Fahrzeug mit-mindestens einer Multimediasteuereinheit (3, 4) und mit mindestens einer Sicherheitssteuereinheit (6) zur Steuerung von Multimediafunktionen und Sicherheitsfunktionen, wobei die Fahrzeugeinheit (1, 20) als Vermittlungseinheit zwischen der Multimediasteuereinheit (3, 4) und der Sicherheitssteuereinheit (6) vorgesehen ist und wobei die Vermittlungseinheit (1, 20) von der Multimediasteuereinheit (3, 4) empfangene Daten aufbereitet und der Sicherheitssteuereinheit zur Verfügung stellt,
**dadurch kennzeichnet,**
**dass** die Vermittlungseinheit (1, 20) auch von der Sicherheitssteuereinheit (3, 4) empfangene Daten an die Multimediasteuereinheit weitergibt und dass die Vermittlungseinheit (1, 20) eine höhere Sicherheitsstufe als die Multimediasteuereinheit (3, 4) und eine niedrigere Sicherheitsstufe als die Sicherheitssteuereinheit (6) aufweist und eine Systemüberwachung der Vermittlungseinheit (1) stattfindet die Vermittlungseinheit (1, 20) mindestens einen Anschluss (7) für eine Multimediasteuereinheit (3, 4) und mindestens einen Anschluss (8) für eine Sicherheitssteuereinheit (6) aufweist, welche unterschiedliche Sicherheitsstufen aufweisen.

## Claims

1. Vehicle unit in a vehicle comprising at least one multimedia control unit (3, 4) and at least one safety control unit (6) for controlling multimedia functions and safety functions, wherein the vehicle unit (1, 20) is provided as a switching unit between the multimedia control unit (3, 4) and the safety control unit (6), and wherein the switching unit (1, 20) processes data received from the multimedia control unit (3, 4) and makes said data available to the safety control unit, **characterized in that** the switching unit (1, 20) also passes on data received from the safety control unit (3, 4) to the multimedia control unit, and **in that** the switching unit (1, 20) has a higher safety level than the multimedia control unit (3, 4) and a lower safety level than the safety control unit (6) and system monitoring of the switching unit (1) takes place, the switching unit (1, 20) having at least one connection (7) for a multimedia control unit (3, 4) and at least one connection (8) for a safety control unit (6), which connections have different safety levels.

## Revendications

1. Unité de véhicule embarquée dans un véhicule comprenant au moins une unité de commande multimédia (3, 4) et au moins une unité de commande de sécurité (6) pour commander des fonctions multimédia et les fonctions de sécurité, l'unité de véhicule embarquée (1, 20) étant prévue sous forme d'unité de commutation entre l'unité de commande multimédia (3, 4) et l'unité de commande de sécurité (6) et l'unité de commutation (1, 20) traitant des données reçues de l'unité de commande multimédia (3, 4) et les fournissant à l'unité de commande de sécurité,
**caractérisée en ce que**
l'unité de commutation (1, 20) transmet également des données reçues de l'unité de commande de sécurité (3, 4) à l'unité de commande multimédia et **en ce que** l'unité de commutation (1, 20) présente un degré de sécurité plus élevé que l'unité de commande multimédia (3, 4) et un degré de sécurité inférieur à l'unité de commande de sécurité (6) et une surveillance du système de l'unité de commutation (1) a lieu, l'unité de commutation (1, 20) présentant au moins un raccord (7) pour une unité de commande multimédia (3, 4) et au moins un raccord (8) pour une unité de commande de sécurité (6) qui présentent des degrés de sécurité différents.
